# EUROPEAN PATENT APPLICATION

(11) **EP 2 733 008 A1**
(43) Date of publication of application: **21.05.2014**
(21) Application number: 11869423.1
(22) Date of filing: 14.07.2011
(51) Int. Cl.: B60L 9/18, H02P 21/00, H02P 27/04

(54) **VEHICLE DRIVING DEVICE**

(71) Applicant: TOYOTA JIDOSHA KABUSHIKI KAISHA, Toyota-shi, Aichi-ken, 471-8571 (JP)
(72) Inventor: MORISAKI, Keisuke, Toyota-shi Aichi-ken 471-8571 (JP)
(74) Representative: Winter, Brandl, Fürniss, Hübner, Röss, Kaiser, Polte - Partnerschaft
(86) International application number: PCT/JP2011/066064
(87) International publication number: WO 2013/008328

(57) **Abstract**

A vehicle driving device includes a high-voltage battery (B1), a voltage converter (12) capable of converting a voltage of the high-voltage battery (B1) to a voltage ranging from the voltage of the high-voltage battery (B1) to a predetermined upper limit voltage, an inverter (22) supplied with a power-supply voltage from the voltage converter (12), a driving motor (MG2) driven by the inverter (22), and a control device (30) for controlling the voltage converter (12) and the inverter (22). The control device (30) determines whether or not to limit an upper limit voltage of the voltage converter (12) smaller than the predetermined upper limit voltage on the basis of a usage environment or usage load of a vehicle. In the case where the upper limit voltage of the voltage converter (12) is limited smaller than the predetermined upper limit voltage, the control device (30) drives the inverter (22) after limiting a request torque on the basis of an accelerator pedal operation performed by a driver.

## Description

### TECHNICAL FIELD

The present invention relates to a vehicle driving device, and in particular, relates to a vehicle driving device equipped with a voltage converter capable of boosting a voltage of a power storage device.

### BACKGROUND ART

In a vehicle such as an electric vehicle or a hybrid vehicle mounted with a driving motor, a voltage of a battery is configured to be boosted by a voltage converter and thereafter supplied to an inverter for driving the motor.

As the motor rotates at a high speed, a counter electromotive force generated thereby increases. In order to maintain good controllability in the case where the counter electromotive force exceeds the voltage of the battery, a power-supply voltage to be supplied to the inverter is boosted by the voltage converter higher than the counter electromotive force.

Japanese Patent Laying-Open No. 2010-239791 (PTD 1) discloses a vehicle having such voltage converter which adjusts a voltage on the basis of an atmospheric pressure and a temperature of the electric motor to a proper one which is thereafter applied to a driving circuit for driving an electric motor.

In the vehicle, a rated voltage of the motor is set to a limit voltage when the temperature of the motor is less than a predetermined temperature (100 °C), and when the temperature of the motor is equal to or higher than the predetermined temperature, a voltage which tends to become smaller as the atmospheric pressure becomes smaller (the altitude becomes higher) is set as the limit voltage, and a desired voltage to be supplied to the inverter is determined according to the limit voltage so as to control the voltage converter. Thereby, in the case where the temperature of the motor is low and a dielectric breakdown is unlikely to occur in the motor, a voltage is prevented from being unnecessarily applied to the inverter, which makes it possible to prevent a possible torque from being unnecessarily output of the motor; and in the case where the temperature of the motor is high and it is necessary to protect the motor, the voltage to be applied to the inverter is limited by using the limit voltage on the basis of the atmospheric pressure, which makes it possible to protect the motor.

### CITATION LIST

### PATENT DOCUMENT

PTD 1: Japanese Patent Laying-Open No. 2010-239791
PTD 2: Japanese Patent Laying-Open No. 2008-284908
PTD 3: Japanese Patent Laying-Open No. 2004-350422
PTD 4: Japanese Patent Laying-Open No. 2007-295703
PTD 5: Japanese Patent Laying-Open No. 2004-104937

### SUMMARY OF INVENTION

### TECHNICAL PROBLEM

In the vehicle disclosed in Japanese Patent Laying-Open No. 2010-239791, the dielectric breakdown is prevented from occurring in the motor by limiting the boost of a voltage on the basis of the temperature of the motor and the atmospheric pressure without limiting a possible driving force from being unnecessarily output of the motor.

Meanwhile, a motor of an electric vehicle or the like is controlled according to a timely selection among a PWM control mode, an overmodulation PWM control mode and a rectangular wave control mode. As a rotation speed of the motor varies, the mode selection is switched among the control modes.

However, the mode switching point is performed at a low rotation speed in the case where the boost of a voltage is being limited compared with the case where the boost of a voltage is not limited. The controllability at a transient region decreases in switching the control mode and becomes significant in a low speed region, and thereby, it is possible to sense a shock in switching the control mode of the motor.

An object of the present invention to provide a vehicle driving device which reduces a shock occurring in switching a control mode of a motor.

### SOLUTION TO PROBLEM

In summary, the present invention provides a vehicle driving device including a power storage device, a voltage converter capable of converting a voltage of the power storage device to a voltage ranging from the voltage of the power storage device to a predetermined upper limit voltage, an inverter supplied with a power-supply voltage from the voltage converter, a driving motor driven by the inverter, and a control device for controlling the voltage converter and the inverter. The control device determines whether or not to limit an upper limit voltage of the voltage converter smaller than the predetermined upper limit voltage on the basis of a usage environment or usage load of a vehicle, and the control device, in the case where the upper limit voltage of the voltage converter is limited smaller than the predetermined upper limit voltage, drives the inverter after limiting a request torque on the basis of an accelerator pedal operation performed by a driver.

Preferably, the control device controls the inverter by selecting one control mode of a plurality of control modes including a sinusoidal PWM control mode and an overmodulation PWM control mode. The control device limits the request torque so as to reduce a toque shock occurring in selecting the control mode.

Preferably, the control device determines whether or not to limit the upper limit voltage of the voltage converter smaller than the predetermined upper limit voltage on the basis of an atmospheric pressure or a temperature associated with a motor temperature.

Preferably, the control device selects a minimum voltage among a first upper limit voltage determined on the basis of an atmospheric pressure, a second upper limit voltage determined on the basis of a temperature of cooling water for cooling the motor, and a third upper limit voltage determined on the basis of a vehicle load as the upper limit voltage of the voltage converter.

The present invention of another aspect provides a driving method for a vehicle. The vehicle includes a power storage device, a voltage converter capable of converting a voltage of the power storage device to a voltage ranging from the voltage of the power storage device to a predetermined upper limit voltage, an inverter supplied with a power-supply voltage from the voltage converter, a driving motor driven by the inverter, and a control device for controlling the voltage converter and the inverter. The driving method includes the steps of determining whether or not to limit an upper limit voltage of the voltage converter smaller than the predetermined upper limit voltage on the basis of a usage environment or usage load of the vehicle, and driving the inverter after limiting a request torque on the basis of an accelerator pedal operation performed by a driver in the case where the upper limit voltage of the voltage converter is limited smaller than the predetermined upper limit voltage.

### ADVANTAGEOUS EFFECTS OF INVENTION

According to the present invention, the balance between performance of a motor and protection thereof is achieved and a shock occurring in switching a control mode of the motor is reduced through modifying the boost of a voltage in accordance with a usage environment such as atmospheric pressure so as to improve ride quality.

### BRIEF DESCRIPTION OF DRAWINGS

Fig. 1 is a circuit diagram illustrating a configuration of a vehicle according to an embodiment of the present invention;
Fig. 2 is a view illustrating an example of a configuration of a control device 30;
Fig. 3 is a view illustrating how a control mode is determined for a motor generator MG1 or MG2 at a certain boosted voltage;
Fig. 4 is a view explaining changes of a boosted voltage and changes of a rotation speed occurring in switching a control mode;
Fig. 5 is a flowchart explaining controls performed by a MG-ECU 34 in Fig. 2 for a voltage converter;
Fig. 6 is a flowchart explaining controls performed by a PM-ECU 32 in Fig. 2for the voltage converter;
Fig. 7 is a view illustrating an example of a map representing a relationship between an atmospheric pressure PA and a system voltage VH;
Fig. 8 is a view illustrating an example of a map representing a relationship between a cooling water temperature TW and the system voltage VH;
Fig. 9 is a view illustrating an example of a map representing a relationship between a vehicle driving load LD and the system voltage VH;
Fig. 10 is a view explaining the limitation of a motor torque at step S27 in Fig. 6;
Fig. 11 is a waveform diagram explaining a relationship between a torque magnitude and a torque shock in switching the control mode; and
Fig. 12 is a view explaining a magnitude of a torque occurring in switching the control mode.

### DESCRIPTION OF EMBODIMENTS

Hereinafter, an embodiment of the present invention will be described in detail with reference to the drawings. It should be noted that in the drawings mentioned below, the same or corresponding portions will be given the same reference numerals and the description thereof will not be repeated.

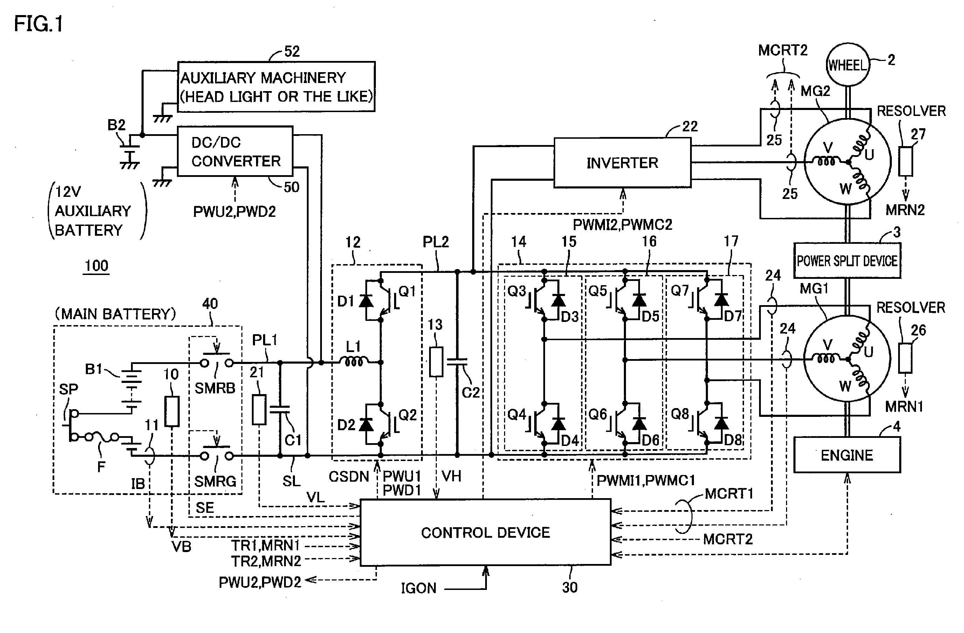

Fig. 1 is a circuit diagram illustrating a configuration of a vehicle according to an embodiment of the present invention.

With reference to Fig. 1, a vehicle 100 includes a battery unit 40, an engine 4, motor generators MG1 and MG2, a power split device 3, a wheel 2, and a control device 30.

Power split device 3 is a mechanism coupled to engine 4 and motor generators MG1 and MG2 to distribute motive power therebetween. As the power split device, for example, a planetary gear train having three rotation shafts of a sun gear, a planetary carrier and a ring gear may be used. The three rotation shafts are coupled to respective rotational shafts of engine 4, motor generators MG1 and MG2. For example, the rotation shaft of motor generator MG1 is hollowed, and the power shaft of engine 4 is inserted through the hollowed rotation shaft, which makes it possible to dispose motor generator MG2, power split device 3, motor generator MG1, and engine 4 along a straight line.

Note that the rotation shaft of motor generator MG2 is coupled to wheel 2 through a reduction gear or a differential gear (not shown). It is acceptable that a reduction gear for the rotation shaft of motor generator MG2 is further installed inside power split device 3.

Battery unit 40 includes a high-voltage battery B1, a system main relay SMRG connected to the negative electrode of high-voltage battery B1, and a system main relay SMRB connected to the positive electrode of high-voltage battery B1. System main relays SMRG and SMRB are controlled to be in a conducted state or a non-conducted state in response to a control signal SE supplied from control device 30.

As high-voltage battery B1, a secondary battery such as a nickel metal hydride battery or a lithium ion battery, a fuel cell or the like may be used.

Battery unit 40 further includes a safety plug SP for interrupting the high voltage as a safety cover is opened, a fuse F connected to high-voltage battery B1 in series together with safety plug SP, a voltage sensor 10 for measuring a voltage VB between both terminals of high-voltage battery B1, and a current sensor 11 for detecting a current IB flowing through high-voltage battery B1.

Vehicle 100 further includes a smoothing capacitor C1 which is connected between a positive bus line PL1 and a negative bus line SL, a voltage sensor 21 which detects a voltage VL between both terminals of smoothing capacitor C1 and outputs it to control device 30, a voltage converter 12 for boosting a voltage between both terminals of smoothing capacitor C1, a smoothing capacitor C2 for smoothing the voltage boosted by voltage converter 12, a voltage sensor 13 which detects a voltage (system voltage VH) between both terminals of smoothing capacitor C2 and outputs it to control device 30, and an inverter 14 which converts a DC voltage supplied from voltage converter 12 into a three-phase AC voltage and outputs it to motor generator MG1.

Voltage converter 12 includes a reactor L1 having one terminal connected to positive bus line PL1, IGBT elements Q1 and Q2 connected in series between a positive bus line PL2 and negative bus line SL, and diodes D1 and D2 connected in parallel to IGBT elements Q1 and Q2, respectively.

The other terminal of reactor L1 is connected to the emitter of IGBT element Q1 and the collector of IGBT element Q2. The cathode of diode D1 is connected to the collector of IGBT element Q1, and the anode of diode D1 is connected to the emitter of IGBT element Q 1. The cathode of diode D2 is connected to the collector of IGBT element Q2, and the anode of diode D2 is connected to the emitter of IGBT element Q2.

Inverter 14, after receiving a boosted voltage from voltage converter 12, drives motor generator MG1 to start engine 4, for example. Moreover, inverter 14 transfers the power generated in motor generator MG1 by mechanical power transmitted from engine 4 back to voltage converter 12. At this time, voltage converter 12 is controlled by control unit 30 to operate as a step-down circuit.

Inverter 14 includes a U-phase arm 15, a V-phase arm 16, and a W-phase arm 17. U-phase arm 15, V-phase arm 16 and W-phase arm 17 are connected in parallel between positive bus line PL2 and negative bus line SL.

U-phase arm 15 includes IGBT elements Q3 and Q4 connected in series between positive bus line PL2 and negative bus line SL, and diodes D3 and D4 connected in parallel to IGBT elements Q3 and Q4, respectively. The cathode of diode D3 is connected to the collector of IGBT element Q3, and the anode of diode D3 is connected to the emitter of IGBT element Q3. The cathode of diode D4 is connected to the collector of IGBT element Q4, and the anode of diode D4 is connected to the emitter of IGBT element Q4.

V-phase arm 16 includes IGBT elements Q5 and Q6 connected in series between positive bus line PL2 and negative bus line SL, and diodes D5 and D6 connected in parallel to IGBT elements Q5 and Q6, respectively. The cathode of diode D5 is connected to the collector of IGBT element Q5, and the anode of diode D5 is connected to the emitter of IGBT element Q5. The cathode of diode D6 is connected to the collector of IGBT element Q6, and the anode of diode D6 is connected to the emitter of IGBT element Q6.

W-phase arm 17 includes IGBT elements Q7 and Q8 connected in series between positive bus line PL2 and negative bus line SL, and diodes D7 and D8 connected in parallel to IGBT elements Q7 and Q8, respectively. The cathode of diode D7 is connected to the collector of IGBT element Q7, and the anode of diode D7 is connected to the emitter of IGBT element Q7. The cathode of diode D8 is connected to the collector of IGBT element Q8, and the anode of diode D8 is connected to the emitter of IGBT element Q8.

Motor generator MG1 is a permanent magnet synchronous motor of three phases, and one ends of three coils of U, V and W phases, respectively, are connected to each other at a midpoint. The other end of the U-phase coil is connected to a connection node between IGBT elements Q3 and Q4. The other end of the V-phase coil is connected to a connection node between IGBT elements Q5 and Q6. The other end of the W-phase coil is connected to a connection node between IGBT elements Q7 and Q8.

A current sensor 24 detects the current flowing through motor generator MG1 as a motor current value MCRT1, and outputs motor current value MCRT1 to control device 30.

Vehicle 100 further includes an inverter 22 connected to voltage converter 12 in parallel to inverter 14.

Inverter 22 converts a DC voltage output from voltage converter 12 into a three-phase AC voltage and outputs it to motor generator MG2 for driving wheel 2. Further, inverter 22 returns the power generated in motor generator MG2 due to regenerative braking to voltage converter 12. At this time, voltage converter 12 is controlled by control device 30 to operate as a step-down circuit. The internal configuration of inverter 22, although not shown, is similar to that of inverter 14, and the detailed description thereof will not be repeated.

Resolvers 26 and 27 detect motor rotation speeds MRN1 and MRN2 of motor generators MG1 and MG2, respectively, and send the detected motor rotation speeds MRN1 and MRN2 to control device 30. If the motor rotation speed can be computed directly from a motor voltage or a motor current in control device 30, the resolvers may not be disposed.

Vehicle 100 further includes an auxiliary machinery 52 such as headlights or the like, an auxiliary battery B2 of 12V, and a DC/DC converter 50 interposed between positive bus line PL1, and auxiliary battery B2 and auxiliary machinery 52.

DC/DC converter 50 can steps down a voltage of positive bus line PL2 in response to a voltage step-down instruction PWD2 supplied from control device 30 so as to charge auxiliary battery B2 or supply power to auxiliary machinery 52. Meanwhile, DC/DC converter 50 can boost a voltage of auxiliary battery B2 in response to a voltage boost instruction PWU2 supplied from control device 30 and supply it to positive bus line PL2.

Control device 30 receives torque instruction values TR1 and TR2, respective values of motor rotation speeds MRN1 and MRN2, voltages VB, VL and VH and current IB, motor current values MCRT1 and MCRT2, and an ignition signal IGON.

Control device 30 outputs to converter 12 a control signal PWU1 for performing a voltage boost instruction, a control signal PWD1 for performing a voltage step-down instruction, and a signal CSDN for performing an operation inhibition instruction.

Control device 30 outputs to DC/DC converter 50 a control signal PWU2 for performing a voltage boost instruction and a control signal PWD2 for performing a voltage step-down instruction.

Further, control device 30 outputs to inverter 14 a drive instruction PWMI1 instructing the conversion of a DC voltage output from voltage converter 12 into an AC voltage for driving motor generator MG1, and a regeneration instruction PWMC1 instructing the conversion of an AC voltage generated in motor generator MG1 into a DC voltage for returning to voltage converter 12.

Similarly, control device 30 outputs to inverter 22 a drive instruction PWMI2 instructing the conversion of a DC voltage into an AC voltage for driving motor generator MG2, and a regeneration instruction PWMC2 instructing the conversion of an AC voltage generated in motor generator MG2 into a DC voltage for returning to voltage converter 12.

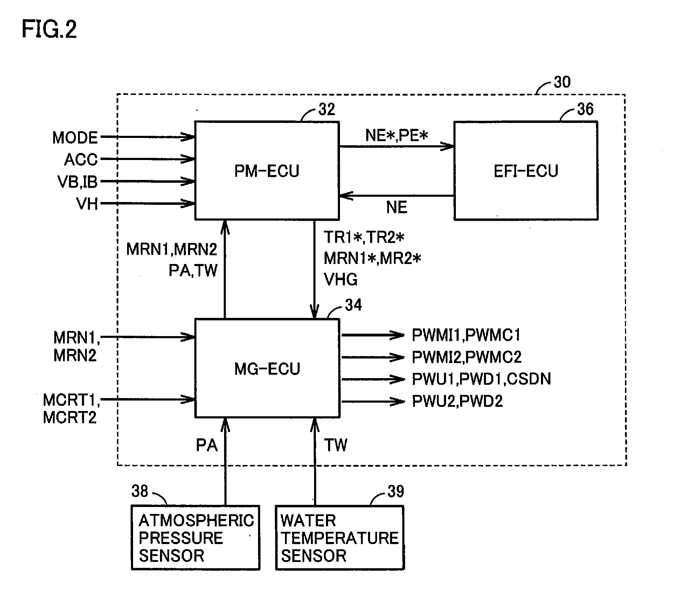

Fig. 2 is a diagram illustrating an example of a configuration of control device 30. With reference to Fig. 2, control device 30 includes three ECUs (Electronic Control Unit), namely, a PM-ECU 32, a MG-ECU 34 and a EFI-ECU 36. Control device 30 may be implemented by a single ECU, or a number of separate ECUs other than three.

PM-ECU 32 calculates the total output for an operation state on the basis of an output request by the driver which is calculated on the basis of an accelerator opening degree Acc associated with an accelerator pedal operation performed by the driver, a shift position and outputs from various sensors, and the state of charge SOC of high-voltage battery B1 which is calculated on the basis of signals VB, IB and the like transmitted from sensors of a battery monitoring unit, and outputs a request signal to each of MG-ECU 34 and EFI-ECU 36.

PM-ECU 32, on the basis of the calculated total output and an engine rotation speed NE, transmits a desired engine rotation speed NE* and a power request value PE* to EFI-ECU 36 so as to obtain a required engine torque. On the basis of the signals, EFI-ECU 36 performs engine controls such as a fuel injection control and an ignition timing control.

Further, PM-ECU 32, on the basis of an output required by motor generator MG2 to perform the driving or to assist the driving force in accordance with the operation state, transmits motor output requests (TR2*, MR2*) to MG-ECU 34. On the basis of the motor output requests and motor current value MCRT2, MG-ECU 34 outputs signals PWMI2 and PWMC2 to control motor generator MG2.

Furthermore, PM-ECU 32, on the basis of the desired engine speed NE* and the actual engine rotation speed NE, transmits signals (TR1*, MR1*) indicating a required power generation amount from motor generator MG1 to MG-ECU 34. On the basis of the required power generation amount and motor current value MCRT1, MG-ECU 34 outputs signals PWMI1 and PWMC1 to control the power generation amount from motor generator MG1.

MG-ECU 34 receives an atmospheric pressure PA output from an atmospheric pressure sensor 38, a cooling water temperature TW output from a water temperature sensor 39, and motor rotation speeds MRN1 and MRN2, and on the basis thereof, outputs signals PWU1, PWD1 and CSDN to control voltage converter 12.

Furthermore, PM-ECU 32 calculates a required output voltage from DC/DC converter 50 and outputs it to MG-ECU 34. On the basis thereof, MG-ECU 34 outputs signals PWU2 and PWD2 to control DC/DC converter 50.

Moreover, PM-ECU 32, on the basis of a signal MODE indicating a driving mode (economy driving mode, power driving mode or the like) specified by the driver, modifies a required output load to the engine.

Meanwhile, in the motor drive system configured to drive and control AC motors such as motor generators MG1 and MG2 by converting a DC voltage through an inverter into an AC voltage as illustrated in Fig. 1, in order to drive the AC motors at a high efficiency, the current in the motors is usually controlled according to a sinusoidal PWM (Pulse Width Modulation) control based on a vector control.

However, in the sinusoidal PWM control mode, since it is impossible to sufficiently enhance a fundamental wave component of the voltage output from the inverter, the voltage utilization factor is limited, and thereby it is difficult to obtain a high output in a high rotation speed region. Taking into consideration of this point, it is proposed to adopt a modulation mode which is capable of outputting a voltage having a greater fundamental wave component than the sinusoidal PWM control mode.

For example, in a control configuration (hereinafter referred to as "rectangular wave voltage control mode") which drives an AC motor to rotate by applying to the AC motor a rectangular wave voltage so as to improve the output in the high rotation speed region, it is proposed to perform a torque control on the AC motor through controlling the phase of the rectangular wave voltage on the basis of a deviation between a torque instruction value and the actual torque value.

Further, it is proposed to adopt an "overmodulation PWM control mode" which utilizes an intermediate voltage waveform between the sinusoidal PWM control mode and the rectangular wave voltage control mode mentioned above. In the vehicle driving device according to the present embodiment, the three control modes of the sinusoidal PWM control, the overmodulation PWM control and the rectangular wave voltage control are used and switched properly according to a modulation factor.

The sinusoidal PWM control mode, generally used as a PWM control, controls the ON/OFF of a switching element in each phase arm according to a comparison between a voltage instruction value of a sinusoidal wave and a voltage of a carrier wave (typically triangular wave). As a result, for a set of a high level period corresponding to the ON period of an upper arm element and a low level period corresponding to the ON period of a lower arm element, the duty ratio is controlled so as to make the fundamental wave component thereof become a sinusoidal wave in a predetermined period. It is well known that in the sinusoidal PWM control mode, the ratio (modulation factor) of the effective value of the fundamental wave component relative to the DC input voltage of the inverter can only be increased to 0.61 at most.

On the other hand, in the rectangular wave voltage control mode, one pulse of a rectangular wave having a ratio between the high level period and the low level period at 1:1 is applied to the AC motor in the predetermined period mentioned above. As a result, the modulation factor can be increased to 0.78.

The overmodulation PWM control mode performs the PWM control similar to the sinusoidal PWM control mode in the above after distorting the carrier wave in a way of reducing the amplitude thereof. As a result, the fundamental wave component can be distorted and the modulation factor can be increased to a range of 0.61 to 0.78.

In the AC motor, as the rotation speed or the output torque increases, the induced voltage becomes high, and accordingly, the required voltage increases. Thereby, it is necessary to set the voltage boosted by voltage converter 12, namely system voltage VH higher than the required motor voltage (induced voltage). Meanwhile, the voltage boosted by voltage converter 12, namely system voltage VH has a limit value (VH maximum voltage).

Therefore, in a region where the required motor voltage (induced voltage) is lower than the maximum value of system voltage VH (VH maximum voltage), the maximum torque control by the sinusoidal PWM control mode or the overmodulation PWM control mode is applied, and the output torque is controlled to be equal to the torque instruction value according to the motor current control in accordance with the vector control.

On the other hand, when the required motor voltage (induced voltage) reaches the maximum value of system voltage VH (VH maximum voltage), the rectangular wave voltage control mode in accordance with the field weakening control is applied while system voltage VH is being kept. In the rectangular wave voltage control mode, since the amplitude of the fundamental wave component is fixed, the torque control is performed through controlling the phase control of the voltage of a rectangular wave pulse on the basis of the deviation between an actual torque value obtained from a dq-axis current value used in the power computation or the vector control and the torque instruction value.

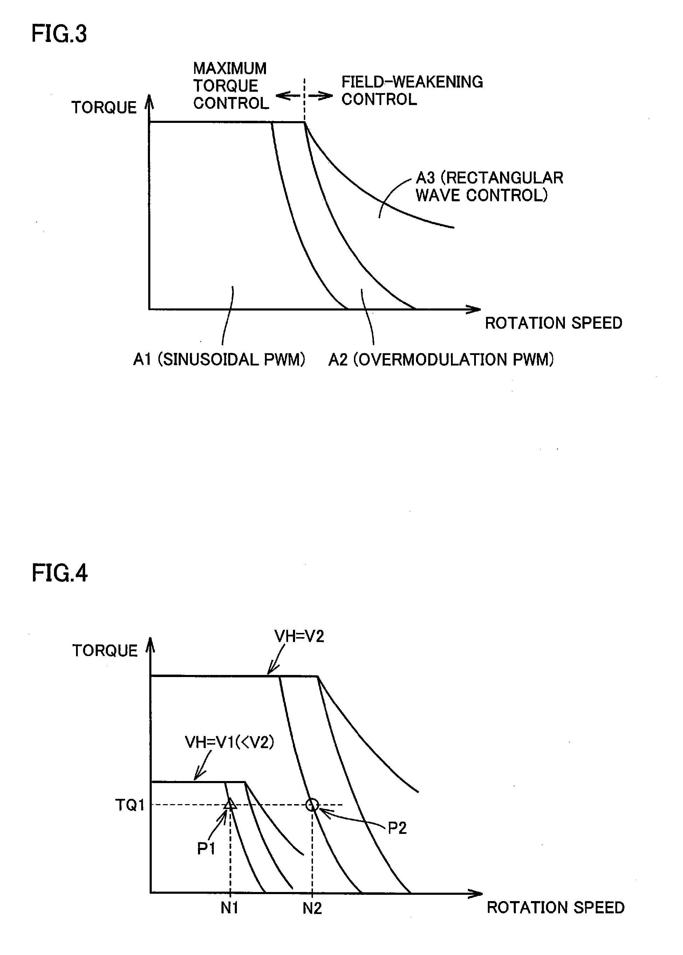

Fig. 3 is a diagram illustrating how a control mode is determined for motor generator MG1 or MG2 at a certain boosted voltage.

As illustrated in Fig. 3, in a low rotation speed region A1, the sinusoidal PWM control mode is applied to reduce the torque fluctuations; in a middle rotation speed region A2, the overmodulation PWM control mode is applied; and in a high rotation speed region A3, the rectangular wave voltage control mode is applied. In particular, the application of the overmodulation PWM control mode and the rectangular wave voltage control mode improves the output from the AC motor in the middle rotation speed region and in the high rotation speed region. Thus, which control mode should be used is determined according to the achievable range of the modulation factor.

In the case where an operating point in the plane of Fig. 3 exceeds the boundaries of regions A1, A2 and A3 as the rotation speed or torque is changed, the control mode is switched.

Fig. 4 is a diagram explaining changes of a boosted voltage and changes of a rotation speed occurring in switching the control mode.

With reference to Fig. 4, in the case where a torque TQ1 is requested when system voltage VH is not limited (VH= V2), the control mode is switched between the sinusoidal PWM mode and the overmodulation PWM mode at point P2 where the rotation speed is N2.

In contrast, in the case where the same torque TQ1 is requested when system voltage VH is being limited (VH= V1, and V1 < V2), the control mode is switched between the sinusoidal PWM mode and the overmodulation PWM mode at point P1 where the rotation speed is N1.

That is to say, in the case where system voltage VH has to be limited in accordance with the atmospheric pressure or the temperature so as to protect the motor components, it is necessary to switch the control mode of the motor at a low rotation speed.

Since the controllability of the motor decreases at low rotation speed N1, switching the control mode at low rotation speed N1 would result in a greater torque shock than at high rotation speed N2.

Therefore, in the present embodiment, in the case where system voltage VH has to be limited, PM-ECU 32 reduces the torque shock by limiting the motor torque when a request value of the motor torque becomes greater than the predetermined value. Hereinafter, the reduction of the torque shock will be explained through describing in sequence the controls performed by MG-ECU 34 and the controls performed by PM-ECU 32.

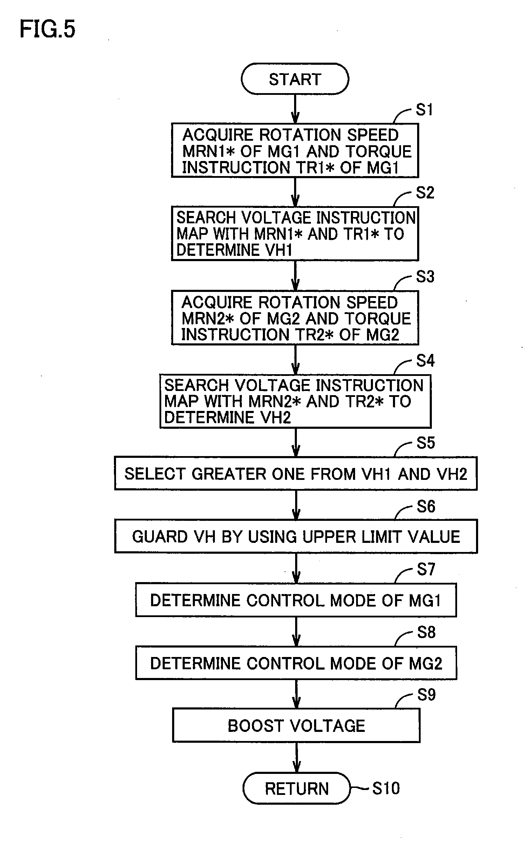

Fig. 5 is a flowchart explaining the controls performed by MG-ECU 34 in Fig. 2 for the voltage converter. The processing of the flowchart is invoked from a predetermined main routine and executed at a predetermined regular interval or at any time when a predetermined condition is satisfied.

With reference to Figs. 1, 2 and 5, as the processing is started, firstly at step S1, MG-ECU 34 acquires a rotation speed MRN1* of motor generator MG1 and a torque instruction value TR1* of motor generator MG1.

Then at step S2, MG-ECU 34 searches a predetermined voltage instruction map with rotation speed MRN1 * and torque TR1* to determine a boosted voltage candidate VH1.

Subsequently at step S3, MG-ECU 34 acquires a rotation speed MRN2* of motor generator MG2 and a torque instruction value TR2* of motor generator MG2.

At step S4, MG-ECU 34 searches the predetermined voltage instruction map with rotation speed MRN2* and torque instruction value TR2* to determine a boosted voltage candidate VH2.

At step S5, MG-ECU 34 determines a final candidate for the instruction value of system voltage VH by selecting the greater one from the boosted voltage candidates VH1 and VH2.

Further at step S6, when the final candidate value for the instruction value of system voltage VH exceeds the boosted voltage upper limit value VHG determined by PM-ECU 32, MG-ECU 34 performs the guarding by using upper limit value VHG.

At step S7, MG-ECU 34 determines a control mode for motor generator MG1 on the basis of the modulation factor. Next, at step S8, MG-ECU 34 determines a control mode for motor generator MG2 on the basis of the modulation factor as well. The modulation factor varies in response to the movement of the operating point in the plane of Fig. 3.

The desired value of the boosted voltage is determined from step S1 to step S6, and as the control mode is determined at steps S7 and S8, at step S9, MG-ECU 34 performs the voltage boosting by controlling voltage converter 12 to generate the desired system voltage VH.

Thereafter at step S10, the control returns back to the main routine.

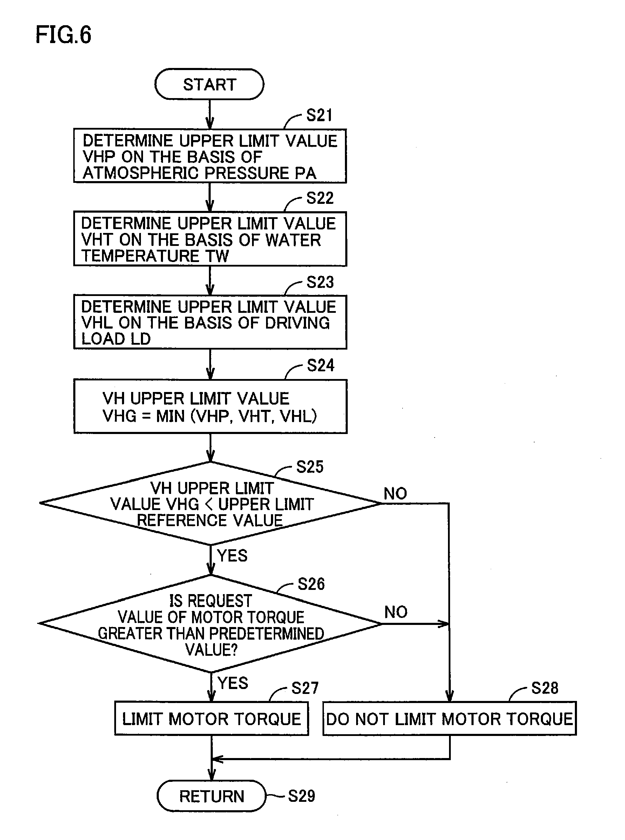

Fig. 6 is a flowchart explaining the controls performed by PM-ECU 32 in Fig. 2 for the voltage converter. The processing of the flowchart is invoked from a predetermined main routine and executed at a predetermined regular interval or at any time when a predetermined condition is satisfied.

With reference to Fig. 2 and Fig. 6, as the processing is started, firstly at step S21, PM-ECU 32 determines an upper limit value VHP of system voltage VH for voltage converter 12 on the basis of atmospheric pressure PA.

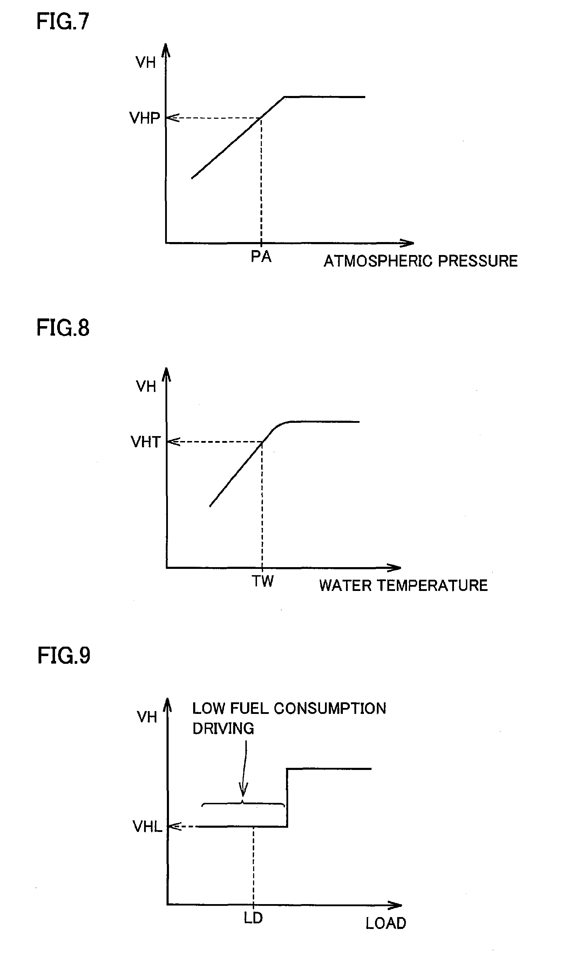

Fig. 7 is a diagram illustrating an example of a map representing a relationship between atmospheric pressure PA and system voltage VH. For example, with reference to the map illustrated in Fig. 7, PM-ECU 32 determines upper limit value VHP corresponding to atmospheric pressure PA measured by atmospheric pressure sensor 38. As the atmospheric pressure is low, discharge is likely to occur, and thereby, system voltage VH is set low. As the atmospheric pressure becomes equal to or greater than a predetermined value, the upper limit value is determined by the other factors, and thus, upper limit value VHP becomes constant.

Referring again to Fig. 6, at step S22 subsequent to step S21, on the basis of cooling water temperature TW, PM-ECU 32 determines an upper limit value VHT of system voltage VH to be output by voltage converter 12.

Fig. 8 is a diagram illustrating an example of a map representing a relationship between cooling water temperature TW and system voltage VH. For example, with reference to the map in Fig. 8, PM-ECU 32 determines upper limit value VHT corresponding to cooling water temperature TW measured by temperature sensor 39. As the cooling water temperature is low, the temperature of the motor will be low. If the temperature of the motor is low, system voltage VH is set low accordingly. As the cooling water temperature becomes equal to or greater than a predetermined value, the upper limit value is determined by the other factors, and thus, upper limit value VHT becomes constant.

Referring again to Fig. 6, at step S23 subsequent to step S22, on the basis of a vehicle driving load LD, PM-ECU 32 determines an upper limit value VHL of system voltage VH to be output by voltage converter 12.

Fig. 9 is a diagram illustrating an example of a map representing a relationship between vehicle driving load LD and system voltage VH. For example, PM-ECU 32 determines an upper limit value VHL corresponding to vehicle driving load LD with reference to the map in Fig. 9. For example, vehicle driving load LD is set lower in the economy driving mode where the driving is prioritized at low fuel consumption, and set higher in the power drive mode where the acceleration performance of the vehicle is prioritized. The driving mode may be selected by the driver through a switch such as an eco-mode switch or may be determined by the control device itself to select a low load in the case where the vehicle is running on a street road or a high load in the case where the vehicle is running on a mountain road.

In a low load driving, in order to reduce the switching loss of voltage converter 12, voltage converter 12 performs a non-boost driving operation by keeping the upper arm (IGBT element Q1 in Fig. 1) at the ON state and the lower arm (IGBT element Q2 in Fig. 1) at the OFF state.

Referring again to Fig. 6, at step S24 subsequent to step S23, PM-ECU 32 determines the upper limit value of system voltage VH as the minimum value among upper limit values VHP, VHT and VHL calculated respectively at steps S21, S22 and S23. Then, at step S25, PM-ECU 32 determines whether or not the upper limit value of system voltage VH determined at step S24 is lower than a upper limit reference value, i.e., whether or not the upper limit value of system voltage VH is set lower than normal in order to protect the motor components.

The procedure proceeds to step S26 if it is determined that the upper limit value of system voltage VH is lower than the upper limit reference value at step S25, and otherwise, the procedure proceeds to step S28.

At step S26, whether or not the request value of the motor torque determined on the basis of the accelerator pedal operations at the time is greater than a predetermined value. The procedure proceeds to step S27 if it is determined that the request value of the motor torque is greater than the predetermined value at step S26, and otherwise, the procedure proceeds to step S28.

At step S27, PM-ECU 32 limits the motor torque. For example, instead of limiting the torque of motor generator MG2, the engine is made to output the corresponding amount of torque. On the other hand, at step S28, the motor torque is set as being requested normally without any particular limitation.

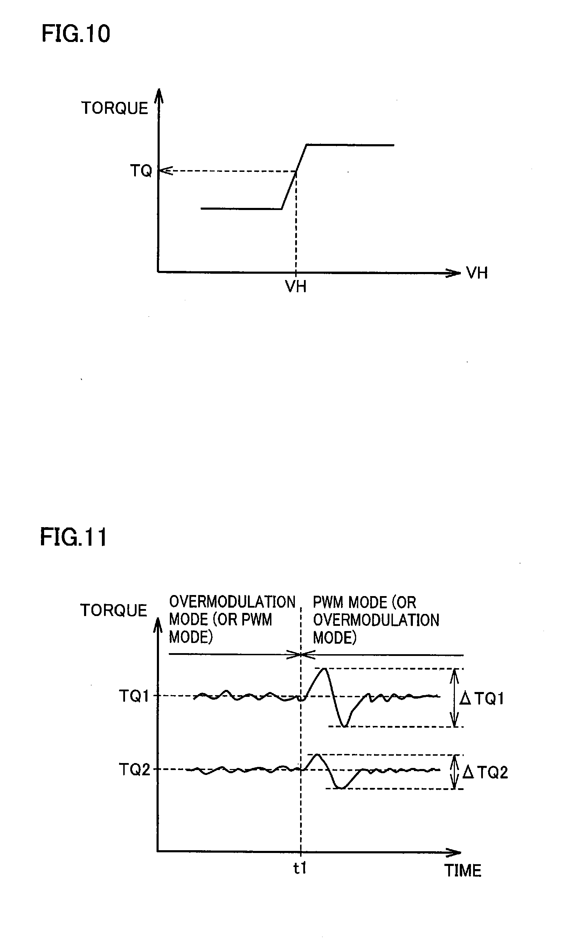

Fig. 10 is a diagram explaining the limitation of the motor torque at step S27 in Fig. 6. At step S27 in Fig. 6, a torque TQ is determined in response to system voltage VH at the time according to a formula or a preliminarily defined map in Fig. 10 or the like. If the request value of the motor torque exceeds torque TQ determined on the basis of the relationship in Fig. 10, the request value of the motor torque is limited to torque TQ.

After the processing of step S27 or step S28 is completed, the procedure proceeds to step S29 and the control returns to the main routine.

Fig. 11 is a waveform diagram explaining a relationship between a torque magnitude and a torque shock in switching the control mode.

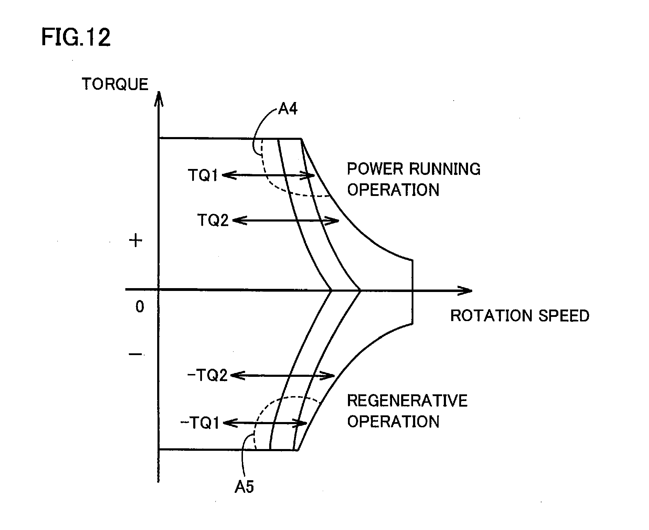

Fig. 12 is a diagram explaining the magnitude of a torque occurring in switching the control mode.

With reference to Fig. 11, it is assumed that the control mode is switched from the overmodulation PWM mode to the sinusoidal PWM mode (or the control mode is switched from the sinusoidal PWM mode to the overmodulation PWM mode) at time t1.

If the torque in the switching is TQ1, then the torque fluctuation occurring in the switching will be ΔTQ1. Meanwhile, as the torque decreases to TQ2, then the torque fluctuation will be ΔTQ2 which is smaller than the torque fluctuation ATQ1 in the case where the torque is TQ 1.

The torque fluctuation in switching the control mode is great in regions A4 and A5 of Fig. 12, and thereby, the passenger will feel uncomfortable. However, as the torque becomes smaller than that in regions A4 and A5 and approaches to zero, the passenger will not feel uncomfortable. This boundary value is correspondent to the predetermined value of step S26, namely the determination threshold value.

Therefore, in a power running operation, when the request value of the motor torque is determined to be greater than the predetermined value at step S26 of Fig. 6, if the request value of the motor torque, for example, is TQ1 illustrated in Fig. 12, the motor torque is limited to TQ2 illustrated in Fig. 12 at step S27 to reduce the torque shock.

Meanwhile, in a regenerative operation, when the request value of the motor torque is determined to be greater than the predetermined value at step S26 of Fig. 6, if the request value of the motor torque, for example, is -TQ1 illustrated in Fig. 12, the motor torque is limited to -TQ2 illustrated in Fig. 12 at step S27 to reduce the torque shock.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in meaning and scope to the claims.

### REFERENCE SIGNS LIST

2: wheel; 3: power split device; 4: engine; 10, 13, 21: voltage sensor; 11, 24: current sensor; 12: voltage converter; 14, 22: inverter; 26,27: resolver; 30: control device; 38: atmospheric pressure sensor; 39: water temperature sensor; 40: battery unit; 50: DC/DC converter; 52: auxiliary machinery; 100: vehicle; B1: high-voltage battery; B2: auxiliary battery; C1, C2: smoothing capacitor; D1-D8: diode; F: fuse; L1: reactor; MG1, MG2: motor generator; MRN1, MRN2, N1, N2: rotation speed; PL1, PL2: positive bus line; Q1-Q8: element; SL: negative bus line; SMRB, SMRG: system main relay; SP: safety plug

## Claims

1. A vehicle driving device, comprising:
a power storage device (B1);
a voltage converter (12) capable of converting a voltage of said power storage device (B1) to a voltage ranging from the voltage of said power storage device (B1) to a predetermined upper limit voltage;
an inverter (22) supplied with a power-supply voltage from said voltage converter (12);
a driving motor (MG2) driven by said inverter (22); and
a control device (30) for controlling said voltage converter (12) and said inverter (22),
said control device (30) determining whether or not to limit an upper limit voltage of said voltage converter (12) smaller than said predetermined upper limit voltage on the basis of a usage environment or usage load of a vehicle, and
said control device (30), in the case where the upper limit voltage of said voltage converter (12) is limited smaller than said predetermined upper limit voltage, driving said inverter (22) after limiting a request torque on the basis of an accelerator pedal operation performed by a driver.

2. The vehicle driving device according to claim 1, wherein
said control device (30) controls said inverter by selecting one control mode of a plurality of control modes including a sinusoidal PWM control mode and an overmodulation PWM control mode, and
said control device (30) limits said request torque so as to reduce a toque shock occurring in selecting said control mode.

3. The vehicle driving device according to claim 1, wherein
said control device (30) determines whether or not to limit the upper limit voltage of said voltage converter smaller than said predetermined upper voltage on the basis of an atmospheric pressure or a temperature associated with a motor temperature.

4. The vehicle driving device according to claim 1, wherein
said control device (30) selects a minimum voltage among a first upper limit voltage determined on the basis of an atmospheric pressure, a second upper limit voltage determined on the basis of a temperature of cooling water for cooling the motor, and a third upper limit voltage determined on the basis of a vehicle load as the upper limit voltage of said voltage converter.

5. A driving method for a vehicle,
said vehicle including
a power storage device,
a voltage converter (12) capable of converting a voltage of said power storage device to a voltage ranging from the voltage of said power storage device to a predetermined upper limit voltage,
an inverter (22) supplied with a power-supply voltage from said voltage converter (12),
a driving motor driven by said inverter (22), and
a control device (30) for controlling said voltage converter (12) and said inverter,
said driving method comprising the steps of:
determining whether or not to limit an upper limit voltage of said voltage converter (12) smaller than said predetermined upper limit voltage on the basis of a usage environment or usage load of the vehicle; and
driving said inverter (22) after limiting a request torque on the basis of an accelerator pedal operation performed by a driver in the case where the upper limit voltage of said voltage converter (12) is limited smaller than said predetermined upper limit voltage.
